# FASCICULE DE BREVET EUROPEEN

(11) **EP 1 298 026 B1**
(45) Date de publication et mention de la délivrance du brevet: **04.08.2010**
(21) Numéro de dépôt: 02292368.4
(22) Date de dépôt: 26.09.2002
(51) Int. Cl.: B62B 5/06, B60D 1/00, B60D 1/145, B60D 1/50

(54) **Timon d'attelage et de manoeuvre d'un chariot**
Anhängerdeichsel und Betätigungsvorrichtung für einen Wagen
Trailer hitch and means for manoeuvring a carriage

(30) Priorité: 26.09.2001 FR 0112363
(43) Date de publication de la demande: 02.04.2003
(73) Titulaire: COUTIER INDUSTRIE, F-57100 Thionville (FR)
(72) Inventeur: Coutier, Charles, 57570 Cattenom (FR)
(74) Mandataire: Robert, Jean-Pierre

(56) Documents cités:
- EP-A- 0 226 060
- DE-A- 3 340 344
- DE-A- 19 810 378
- FR-A- 2 457 247
- FR-A- 2 458 247
- FR-A- 2 565 542
- US-A- 4 351 541
- US-A- 4 613 146

## Description

La présente invention concerne un timon d'attelage. FR 2458247 l'état de la technique le plus proche, divulgue les caractéristiques du préambule de la revendication 1.

Les chariots de manutention utilisés, notamment dans les ateliers, sont généralement équipés d'un timon pour leur manoeuvre et/ou leur attelage.

Ce timon est formé par une pièce métallique dont une extrémité est articulée au châssis du chariot autour d'un axe sensiblement horizontal et dont l'autre extrémité est pourvue d'un anneau d'attelage. Dans certains cas, l'articulation du timon au châssis est réalisée par l'intermédiaire d'un essieu directeur.

Les timons usuels sont en général des barres métalliques relativement pesantes qui sont une source importante de bruit lors de la manoeuvre des chariots. En effet, tant au niveau de l'axe de l'articulation qu'au niveau de l'attelage, il existe nécessairement des jeux mécaniques, qui augmentent au cours de l'utilisation du fait de l'usure et qui engendrent des chocs lors de la manoeuvre du chariot au moment des accélérations, des freinage et au passage des irrégularités du sol. La barre métallique pleine constitue un amplificateur de bruit du fait de ses capacités à résonner. Il s'agit là d'une source de pollution sonore importante que l'on cherche à supprimer.

Un autre inconvénient des dispositifs connus réside dans le poids important des timons. Ceux-ci, en métal massif, sont mal commodes à manipuler à la main entre une position de travail dans laquelle ils s'étendent longitudinalement et horizontalement à partir du chariot et une position de repos dans laquelle, pour diminuer l'encombrement du chariot, le timon est remonté verticalement à l'avant du chariot. En outre, à cause de ce poids important, le maintien vertical du timon doit être assuré de manière certaine contre son rabattement spontané. Le verrouillage de cette position est obtenu en ayant prévu que l'articulation du timon au chariot soit réalisée par l'intermédiaire d'une lumière longitudinale dans le timon, traversée par l'axe d'articulation, de sorte qu'au relevage du timon il se produise un glissement vers le bas de ce dernier par rapport à l'axe d'articulation, sous son propre poids, le long de la lumière. Alors le timon est engagé contre une butée anti-basculement et y est maintenu par son propre poids. Cela demande à l'utilisateur d'exercer un soulèvement du timon pour le remettre en position de service. Il s'agit d'une opération pénible car le timon est lourd et dangereuse si ce dernier échappe des mains de l'utilisateur. La lumière augmente encore la production de bruit au niveau de l'articulation du timon au châssis du chariot.

Pour remédier à cet état de chose, l'invention a pour objet un timon d'attelage et de manoeuvre d'un chariot, notamment d'atelier, comportant une barre longitudinale et, à l'extrémité de cette barre, des tourillons de son articulation au chariot. Plus précisément, la barre est formée par une structure en caisson formés de deux demi-caissons emboités l'un dans l'autre remplie d'un matériau d'absorption acoustique.

Le matériau interne du timon empêche ce dernier de résonner sous l'effet des chocs. En outre sa constitution sous forme d'un caisson en fait un matériel léger aisé à manipuler à la main. Il est alors possible de lui donner une géométrie mieux adaptée aux efforts qu'il doit subir ; en particulier le timon peut être réalisé sous la forme d'un T avec une traverse d'extrémité perpendiculaire à la barre longitudinale, elle-même traversée ou porteuse d'un axe ou de tourillons d'articulation du timon au chariot.

Dans une réalisation particulière de l'invention, la barre est équipée à son extrémité libre d'un anneau d'attelage comprenant un matériau d'absorption et d'amortissement acoustique des chocs entre l'anneau et un crochet d'attelage. Dans un mode particulier de réalisation, cet anneau est réalisé en une structure feuilletée avec au moins une plaque en matériau élastomère, en sandwich entre deux plaques métalliques (et de préférence une alternance de plaques métalliques et de plaques élastomères).

Il est ainsi possible de réaliser un timon léger qui permet d'envisager d'autres moyens pour son maintien en position verticale, comme par exemple les moyens d'encliquetage supprimant le soulèvement du timon par un utilisateur lorsqu'il s'agit de le faire repasser de sa position de repos à sa position en service. En outre, cette légèreté permet de mettre en place un mécanisme de rappel élastique du timon dans sa position verticale, engendrant par exemple un couple de rappel autour de son axe d'articulation horizontale.

Le moyen de maintien est de préférence constitué selon l'invention par une lame de ressort, orthogonale à l'axe d'articulation du timon sur le chariot, pourvue à son extrémité d'une dent pénétrant dans une ouverture du timon en s'effaçant élastiquement en direction de l'axe d'articulation au relevage de ce timon pour s'encliqueter élastiquement derrière le bord arrière de l'ouverture à la fin de ce relevage.

Cette disposition offre à l'utilisateur une grande facilité pour faire passer le timon de sa position de repos à sa position de service : il suffit pour cet utilisateur d'abaisser au pied la dent qui est en saillie à l'extérieur de l'ouverture du timon et de retenir à la main le basculement du timon vers l'avant du chariot, s'il n'est pas équipé d'un rappel élastique en position verticale ou de forcer son abaissement à l'encontre de ce mécanisme de rappel.

D'autres caractéristiques et avantages de l'invention ressortiront de la description d'un mode de sa réalisation donnée ci-après à titre d'exemple non limitatif.

Il sera fait référence aux dessins annexés parmi lesquels :
- la figure 1 illustre un chariot équipé d'un timon conforme à l'invention,
- la figure 2 et la figure 3 sont des vues en perspective de deux parties constitutives du timon de la figure 1, réalisées en tôle pliée pour en former par assemblage une structure de caisson,
- la figure 4 est une vue schématique des moyens de maintien du timon en position verticale autour de son axe d'articulation,
- les figures 5 et 6 illustrent respectivement par une vue de dessus et une coupe selon la ligne VI-VI de la figure 5 un anneau antibruit conforme à l'invention,
- la figure 7 est un schéma illustrant un frein de chariot associé à un timon rappelé en position verticale.

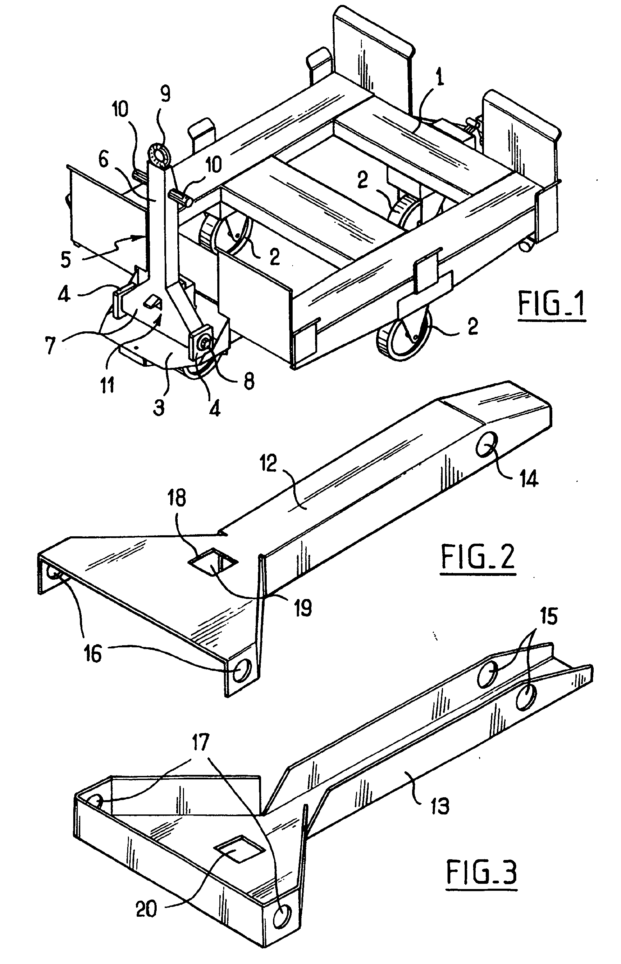

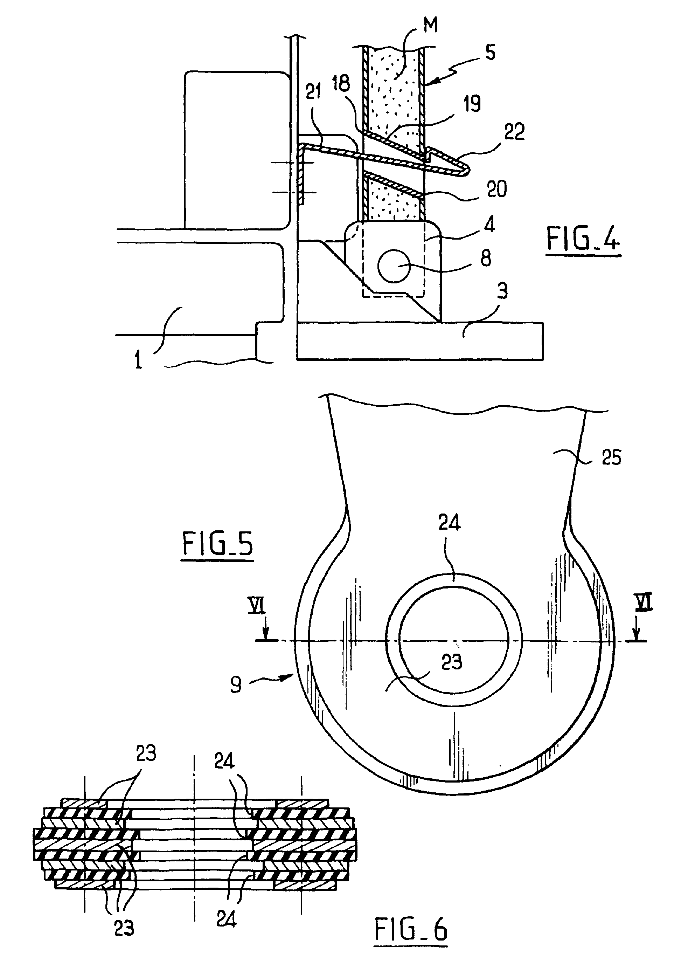

Le chariot de la figure 1 comporte un châssis horizontal 1 soutenu par des roues 2 et prolongé à l'avant par une base d'attelage 3 avec deux paliers 4 pour l'articulation horizontale d'un timon 5. Le timon comporte une barre longitudinale 6 avec une barre transversale 7 formant traverse pour le support de tourillons d'articulation tels que 8. La traverse 7 est ici en forme de triangle pour rigidifier la liaison entre la traverse et la barre. A l'extrémité libre de la barre 6, le timon possède un anneau d'attelage 9 et, dans le cas de figure, deux poignées 10 de manoeuvre manuelle du chariot. Le timon 5 est représenté à la figure 1 dans sa position de repos, c'est-à-dire s'étendant verticalement. Il est maintenu dans cette position par des moyens d'encliquetage 11 qui seront décrits plus en détail en regard de la figure 4. Les figures 2 et 3 illustrent respectivement deux demi caissons 12, 13 qui, une fois emboîtés et assemblés, constituent le timon 5. Dans le cas de figure, le demi caisson 12 est tel qu'il vient coiffer et s'emboîter par-dessus le demi caisson 13. Dans l'état d'emboîtement, les orifices 14 du demi caisson 12 et 15 du demi caisson 13 ainsi que les orifices 16 et 17 de ces demi caissons sont en face les uns des autres de manière à définir des paliers ou des moyens de fixation pour d'une part la poignée 10 et d'autre part les tourillons ou axe 8 d'articulation du timon au châssis 1 du chariot. Le demi caisson 12 possède en outre une ouverture de façade 18 prolongée vers l'intérieur par un tube carré 19 qui vient coïncider avec l'ouverture de façade 20 du demi-caisson 13.

Un anneau d'attelage représenté aux figures 5 et 6 peut être rapporté à l'extrémité des demi-caissons par tous moyens connus, soudage, boulonnage, sertissage, rivetage....

Soit avant de constituer le caisson fermé, soit après sa constitution, on emplit l'espace intérieur de celui-ci de matériau d'absorption acoustique. Il peut s'agir d'un matériau alvéolaire en mousse à base de matière plastique découpée et mise en place avant la constitution du timon ou d'un matériau qui est injecté à l'état liquide et qui vient mousser à l'intérieur du caisson déjà constitué (voir la référence M à la figure 4). Le matériau est léger, ce qui n'affecte pas la maniabilité du timon.

A la figure 4, on a représenté partiellement en coupe le timon 5 dans sa position de la figure 1 retenu dans cette position verticale par les moyens de maintien 11. Ces moyens de maintien comprennent une lame élastique 21 rapportée sur une paroi frontale du châssis 1 du chariot pour s'étendre au-dessus de l'axe d'articulation 8, défini par les paliers 4 sur la base d'attelage 3 du chariot et conformé en une dent 22 d'extrémité. La position de cette lame 21 est telle que lorsqu'on relève le timon depuis une position horizontale vers la position représentée, la lame élastique 21 pénètre dans l'ouverture de façade 18 et est forcée à fléchir élastiquement en direction de l'axe 7 par les parois du tube 19 qui sont inclinées, jusqu'à ce que la dent 22 ait passé l'ouverture 20 du timon 5 hors de laquelle elle revient élastiquement pour s'encliqueter derrière le timon lorsque l'on considère le sens de relevage ou devant celui-ci lorsque l'on considère le sens contraire. Cette retenue par encliquetage est possible du fait que le timon est une structure légère, la dent 20 exerçant un effort largement suffisant pour le maintenir en position verticale quels que soient les efforts brusques auxquels peut être soumis le chariot.

Ainsi, l'opérateur pour placer le timon de sa position repos à sa position de service, appuie-t-il sur la dent 22 avec le pied pour faire fléchir la lame 21 afin que cette dent puisse pénétrer à nouveau dans le tube 19 et autoriser le rabattement du timon.

L'articulation du timon au chariot peut être réalisée de différentes manières. Il peut par exemple s'agir d'un axe qui traverse à la fois les ouvertures 16, 17 et les paliers 4, cet axe pouvant être soumis à des contraintes transversales élastiques soit au niveau des paliers soit à l'extérieur de ceux-ci ou à l'intérieur de la traverse du timon pour que les jeux de fonctionnement soient constamment rappelés par des moyens élastiques qui exercent ces contraintes (du genre paliers en élastomère ou butées également en élastomère) ce qui empêche toute formation de bruit au niveau de cette liaison.

Une source de bruit lors de la manoeuvre des chariots, notamment lorsqu'ils sont attelés, réside dans les nombreux chocs que subit l'anneau d'attelage. Aux figures 5 et 6 on a représenté un anneau d'attelage qui est formé par un empilement de tôles métalliques 23 et, en sandwich entre elles, de plaques en élastomère 24. Cet empilement est maintenu serré par tout moyen traversant soit au niveau de sa partie qui définit l'anneau 9 soit au niveau d'une queue 25 permettant sa fixation à l'extrémité du timon 5.

De préférence, les plaquettes d'élastomère seront débordantes des plaques métalliques, notamment en direction de l'espace intérieur de l'anneau pour former les premiers points de contact de l'anneau avec un crochet qui y pénètre. Ceci permet d'amortir les chocs, de les rendre donc silencieux alors que les plaquettes métalliques sont là pour reprendre après écrasement des plaquettes en élastomère les efforts de traction ou de compression que subit le timon lors de sa manoeuvre au moyen d'un tracteur. L'intérêt de cette structure réside aussi dans la facilité de fabrication par découpe des différentes plaques et assemblage par rivetage ou boulonnage de la pile de ces plaques découpées, en pouvant ainsi assembler des matériaux très éloignés l'un de l'autre comme du métal et une matière plastique élastomère ou autre.

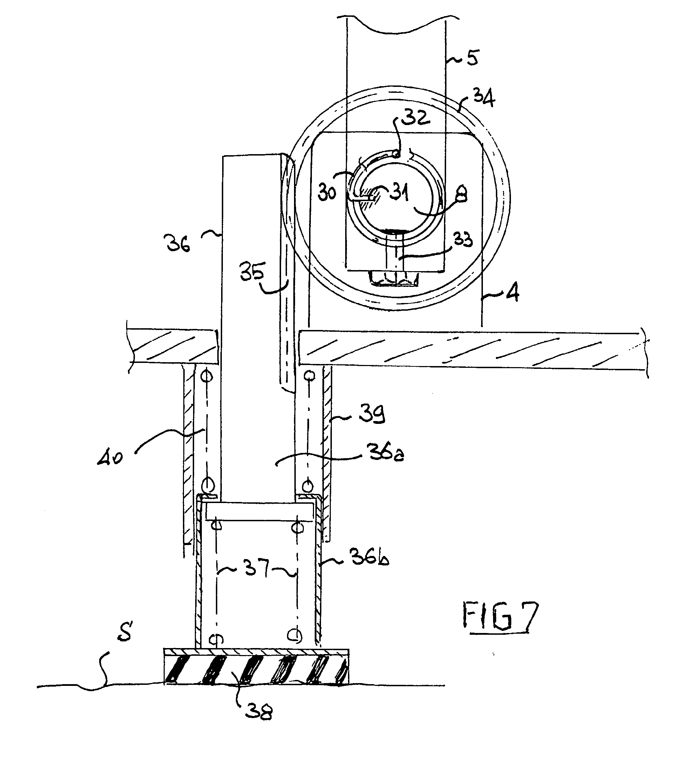

A la figure 7, on retrouve certains des éléments déjà décrits avec les mêmes références. Dans cette réalisation, les tourillons 8 sont constitués par les extrémités d'un arbre transversal. Un ressort hélicoïdal 30 entoure une partie de cet arbre avec une de ses extrémités 31 plantée dans cet arbre et l'autre extrémité 32 plantée dans le palier 4. L'arbre-tourillons 8 est immobilisé en rotation par rapport au timon 5 (vis 33). Ainsi, le ressort 30 imprime-t-il au timon 5 un couple de relevage suffisant pour vaincre l'effet de la gravité et le rappeler dans sa position verticale.

Un pignon 34 est calé sur l'arbre-tourillons 8 par exemple à l'extérieur d'un palier 4 (ou entre le palier et le timon 5 du côté opposé à celui recouvert par le ressort 30). Ce pignon engrène avec une crémaillère 35 portée par un pied coulissant 36 au travers de la base d'attelage 3. La tige 36 est en deux parties télescopiques 36a et 36b, sollicitée en extension par un ressort 37. La partie inférieure 36b porte un patin 38 d'extrémité en caoutchouc ou analogue.

Le pied 36 est monté coulissant dans un tube 39 solidaire de la base d'attelage 3 et un ressort 40 tend à rappeler le pied vers le bas, c'est-à-dire vers le sol S.

On comprend que lorsque le timon se relève, le pignon 34 meuve le pied 36 vers le sol. Le ressort 40 aide à ce mouvement et même aide au relevage du timon et à cet égard est un organe de rappel au moins additionnel au ressort 30. Le ressort 40 peut être suffisamment puissant pour former à lui seul le rappel du timon en position verticale. Le caractère télescopique du pied et le ressort 37 permettent de prendre en compte les irrégularités du sol S et les différentes distances possibles de la base 3 au sol S.

Le pied 36 avec son patin 38 forment un frein pour le chariot qui est en service dès que le chariot est livré à lui-même. Ce frein est « remonté » lorsqu'on agit sur le timon afin de manoeuvrer le chariot à la main ou d'atteler le chariot à un tracteur ou un convoi.

On pourra prévoir, associé au pied-frein 36 un amortisseur parallèle à ce pied destiné à limiter la vitesse de relevage du timon sous l'effet de ses organes de rappel 30, 40.

La manoeuvre du pied 36 peut être assurée par tout autre moyen de transmission s'étendant entre le timon et le pied comme par exemple un jeu de leviers, un ou plusieurs câbles...

Le pied 36 peut être remplacé par un organe mobile du même genre orienté non plus vers le sol mais vers la périphérie d'une roue du chariot telle qu'une roue latérale pour bloquer ou débloquer cette roue sur la position du timon.

## Revendications

1. Timon (5) d'attelage et de manoeuvre d'un chariot, notamment d'atelier, comportant une barre (6, 7) longitudinale et, à l'extrémité de cette barre, des tourillons (8) de son articulation horizontale au chariot, **caractérisé en ce que** la barre (6, 7) est formée par une structure en caisson formée de deux demi-caissons (12, 13) emboîtés l'un dans l'autre, remplie d'un matériau acoustique.

2. Timon selon la revendication 1, **caractérisé en ce que** la barre (6, 7) est équipée à son extrémité libre d'un anneau d'attelage (9) comprenant un matériau d'absorption et d'amortissement acoustique des chocs entre l'anneau et un crochet d'attelage.

3. Timon selon la revendication 2, **caractérisé en ce que** l'anneau (9) est formé à partir d'une structure feuilletée comprenant au moins une plaque (24) intermédiaire en élastomère entre deux plaques (23) métalliques.

4. Chariot équipé d'un timon selon l'une des revendications 1 à 3, dans lequel les tourillons (8) sont logés dans des paliers (4) appartenant à une base (3) d'attelage du chariot, à l'avant de celui-ci, **caractérisé en ce qu'**il comporte des moyens élastiques (30, 39) de rappel du timon (5) en position sensiblement verticale.

5. Chariot selon la revendication 4, **caractérisé en ce qu'**il comporte un frein formé par un patin (38) mobile entre une position active et une position inactive et relié au timon (5) par des moyens de transmission (34, 35) du mouvement du timon (5) autour de son articulation (8) de manière que le relevage du timon (5) corresponde au mouvement du patin (38) en direction de sa position active et, inversement, l'abaissement du timon (5) déplace le patin (38) en direction de sa position inactive.

6. Chariot selon la revendication 5, **caractérisé en ce que** le frein comprend un pied (36) coulissant, perpendiculaire à la base d'attelage (3) dans un guide vertical (39) dont l'extrémité en regard du sol porte le patin (38) susdit, un ressort de rappel (40) tendant à déplacer le patin (38) en direction du sol (S) et un moyen d'entraînement (34, 35) du pied au moins à l'encontre de l'effet du ressort (40).

7. Chariot selon la revendication 6, **caractérisé en ce que** le moyen de rappel du timon (5) comporte le ressort (40) du frein.

8. Chariot selon l'une des revendications 4 à 7, **caractérisé en ce qu'**il comporte un moyen (11) de maintien par encliquetage du timon (5) en position verticale.

9. Chariot selon la revendication 8, **caractérisé en ce que** le timon (5) comprend une ouverture (18, 19, 20) et **en ce que** le moyen de maintien est constitué par une lame de ressort (21) orthogonale à l'axe d'articulation (8) du timon (5) sur le chariot pourvue à son extrémité d'une dent (22) pénétrant dans l'ouverture (18, 19, 20) du timon en s'effaçant élastiquement en direction de l'axe d'articulation (8) au relevage de ce timon pour s'encliqueter élastiquement derrière le bord arrière (20) de l'ouverture à la fin du relevage.

## Claims

1. A drawbar (5) for hitching and maneuvering a cart, in particular a workshop cart, the drawbar comprising a longitudinal bar (6, 7) and, at the end of the bar, trunions (8) for horizontally hinging it to the cart, the drawbar being **characterized in that** the bar (6, 7) is formed by a box structure made of two half-boxes (12, 13) engaged one in the other and filled with an acoustical material.

2. A drawbar according to claim 1, **characterized in that** the bar (6, 7) is fitted at its free end with a hitching ring (9) comprising an acoustic absorber and damper material for absorbing and damping impacts between the ring and a hitching hook.

3. A drawbar according to claim 2, **characterized in that** the ring (9) is made up of a laminated structure comprising at least one intermediate plate (24) of elastomer between two metal plates (23).

4. A cart fitted with a drawbar according to any one of claims 1 to 3, wherein the trunions (8) are housed in bearings (4) forming part of a hitching base (3) of the cart, at the front thereof, the cart being **characterized in that** it includes resilient means (30, 39) for returning the drawbar (5) towards a substantially vertical position.

5. A cart according to claim 4, **characterized in that** it includes a brake formed by a skid (38) movable between an active position and an inactive position, and connected to the drawbar (5) by transmission means (34, 35) for transmitting the movement of the drawbar (5) about its hinge (8) in such a manner that raising the drawbar (5) corresponds to moving the skid (38) towards its active position, and conversely, lowering the drawbar (5) moves the skid (38) to its inactive position.

6. A cart according to claim 5, **characterized in that** the brake comprises a leg (36) that slides perpendicularly to the hitching base (3) in a vertical guide (39), the end of the leg that faces the ground carrying the above-mentioned skid (38), a return spring (40) tending to urge the skid (38) towards the ground (S), and drive means (34, 35) for driving the leg at least against the effect of the spring (40).

7. A cart according to claim 6, **characterized in that** the return means for the drawbar (5) comprise the spring (40) of the brake.

8. A cart according to any one of claims 4 to 7, **characterized in that** it includes holder means (11) for holding the drawbar (5) in the vertical position by snap-fastening.

9. A cart according to claim 8, **characterized in that** the drawbar (5) includes an opening (18, 19, 20), and **in that** the holder means are constituted by a spring blade (21) orthogonal to the hinge axis (8) of the drawbar (5) on the cart and provided at its end with a tooth (22) that penetrates into the opening (18, 19, 20) in the drawbar by retracting resiliently towards the hinge axis (8) when the drawbar is raised, so as to snap-fasten resiliently behind the rear edge (20) of the opening at the end of raising the drawbar.

## Patentansprüche

1. Deichsel (5) zum Anhängen und Manövrieren eines Wagens, insbesondere eines Werkstattwagens, umfassend eine Längsstange (6, 7) und am Ende dieser Stange Lagerzapfen (8) für die horizontale Anlenkung der Stange am Wagen, **dadurch gekennzeichnet, dass** die Stange (6, 7) von einer Kastenstruktur gebildet wird, die aus zwei ineinander gesteckten Halbkästen (12, 13) gebildet und mit einem Schallmaterial gefüllt ist.

2. Deichsel nach Anspruch 1, **dadurch gekennzeichnet, dass** die Stange (6, 7) an ihrem freien Ende mit einem Kupplungsring (9) versehen ist, der ein Schallabsorptions- und -dämpfungsmaterial zur Absorption und Dämpfung von Stößen zwischen dem Ring und einem Kupplungshaken umfasst.

3. Deichsel nach Anspruch 2, **dadurch gekennzeichnet, dass** der Ring (9) aus einer Lamellenstruktur gebildet ist, die mindestens eine Zwischenplatte (24) aus Elastomer zwischen zwei Metallplatten (23) umfasst.

4. Wagen, der mit einer Deichsel nach einem der Ansprüche 1 bis 3 ausgestattet ist, wobei die Lagerzapfen (8) in Lagern (4) angeordnet sind, die zu einer vorne am Wagen vorgesehenen Kupplungsbasis (3) des Wagens gehören, **dadurch gekennzeichnet, dass** er elastische Mittel (30, 39) zum Rückstellen der Deichsel (5) in eine im Wesentlichen vertikale Stellung umfasst.

5. Wagen nach Anspruch 4, **dadurch gekennzeichnet, dass** er eine Bremse umfasst, die aus einem Schuh (38) gebildet ist, der zwischen einer aktiven Position und einer inaktiven Position beweglich und mit der Deichsel (5) über Getriebemittel (34, 35) zur Übertragung der Bewegung der Deichsel (5) um ihre Gelenkverbindung (8) verbunden ist, derart, dass das Anheben der Deichsel (5) der Bewegung des Schuhs (38) in Richtung seiner aktiven Position entspricht und, umgekehrt dazu, das Absenken der Deichsel (5) den Schuh (38) in Richtung seiner inaktiven Position verschiebt.

6. Wagen nach Anspruch 5, **dadurch gekennzeichnet, dass** die Bremse einen Fuß (36) umfasst, der senkrecht zur Kupplungsbasis (3) in einer vertikalen Führung (39) gleitet und dessen dem Boden gegenüberliegendes Ende den oben genannten Schuh (38) trägt, eine Rückstellfeder (40), die darauf gerichtet ist, den Schuh (38) in Richtung des Bodens (S) zu bewegen, und Antriebsmittel (34, 35) zur Mitnahme des Fußes zumindest entgegen der Wirkung der Feder (40).

7. Wagen nach Anspruch 6, **dadurch gekennzeichnet, dass** die Rückstellmittel der Deichsel (5) die Feder (40) der Bremse umfassen.

8. Wagen nach einem der Ansprüche 4 bis 7, **dadurch gekennzeichnet, dass** er Haltemittel (11) umfasst, um die Deichsel (5) mittels Einrasten in vertikaler Stellung zu halten.

9. Wagen nach Anspruch 8, **dadurch gekennzeichnet, dass** die Deichsel (5) eine Öffnung (18, 19, 20) umfasst und dass die Haltemittel von einem Federblatt (21) gebildet sind, das orthogonal zur Gelenkverbindungsachse (8) zur Anlenkung der Deichsel (5) an dem Wagen ist und an seinem Ende mit einem Zahn (22) versehen ist, der in die Öffnung (18, 19, 20) der Deichsel eindringt, indem er beim Anheben dieser Deichsel elastisch in Richtung der Gelenkverbindungsachse (8) zurückweicht, um am Ende des Anhebens elastisch hinter dem hinteren Rand (20) der Öffnung einzurasten.
